# EUROPÄISCHE PATENTSCHRIFT

(11) **EP 2 098 838 B1**
(45) Veröffentlichungstag und Bekanntmachung des Hinweises auf die Patenterteilung: **14.08.2019**
(21) Anmeldenummer: 08004185.8
(22) Anmeldetag: 06.03.2008
(51) Int. Cl.: G01F 23/284, G01F 23/28, G01F 23/00, H01R 13/52, F16L 5/10

(54) **Füllstandmessgerät**
Filling level measuring device
Appareil de mesure de niveau de remplissage

(43) Veröffentlichungstag der Anmeldung: 09.09.2009
(73) Patentinhaber: VEGA Grieshaber KG, 77709 Wolfach (DE)
(72) Erfinder: Kopp, Thomas, 77709 Wolfach (DE)
(74) Vertreter: Patentanwälte Bauer Vorberg Kayser

(56) Entgegenhaltungen:
- DE-A1- 10 126 654
- US-A- 5 955 684
- US-A- 6 062 095
- US-A- 6 148 681
- US-A1- 2006 225 499
- US-B1- 6 393 909

## Beschreibung

Die Erfindung bezieht sich auf ein Füllstandmessgerät mit den Merkmalen des Oberbegriffs des Patentanspruchs 1 und ein Verfahren zur Montage eines Füllstandmessgeräts.

Übliche Messgeräte zum Einsatz an Behältnissen, insbesondere Füllstands- und Fülldruckmessgeräte zum Einsatz an Behältnissen sind meist aus mehreren Komponenten aufgebaut.

Der Stand der Technik wird beispielsweise in der US-A-6 148 681, US-A-6 062 095, US-A-5 955 684, DE 101 26 654 A1, US 2006/225499 A1 und US-B1-6 393 909 offenbart.

Eine erste Komponente ist die Steuer- und Auswerteeinheit, die üblicherweise außerhalb des Behältnisses, dessen Innenraum hinsichtlich eines Drucks oder Füllstands zu überwachen ist, angeordnet ist. Dadurch wird sichergestellt, dass die Steuer- und Auswerteeinheit leicht zugänglich ist, was beispielsweise erwünscht sein kann, um Steuerkommandos einzugeben, eine externe Energiezufuhr sicherzustellen oder eine Auslese von Messdaten zu ermöglichen. Da sich die Steuer- und Auswerteeinheit außerhalb des -möglicherweise im Freien aufgestellten-Behälters befindet, ist die in ihr enthaltene Steuer- und Auswerteelektronik in der Regel durch ein diese umgebendes Gehäuse vor Umwelteinflüssen wie beispielsweise starkem Niederschlag, insbesondere Hagel, oder starker Sonneneinstrahlung geschützt.

Eine zweite Komponente ist die Sensoreinheit, die im Innenraum des Behältnisses angeordnet ist und in der Regel zumindest einen -in der Regel in einem Sensorgehäuse aufgenommenen- Sensor mit Anschlüssen aufweist. Der Sensor misst eine physikalische Größe, die mit dem Füllstand- oder Fülldruck korreliert ist und gibt über die Anschlüsse ein dem Messwert entsprechendes Signal ab. Das Sensorgehäuse dient dabei einer stabilen Anordnung und dem Schutz des Sensors.

Offensichtlich ist es notwendig, die Signalkommunikation durch die Behälterwand hindurch zwischen Steuer- und Auswerteelektronik einerseits und Sensoreinheit andererseits zu ermöglichen, wofür sich insbesondere die Verwendung eines meist mehradrig ausgeführten Signalkabels anbietet, das im Behälter an die Anschlüsse der Sensoreinheit angeschlossen ist und außerhalb des Behälters über einen Prozessanschluss mit einer Schnittstelle der Steuer- und Auswerteelektronik verbunden ist. Dabei sind zwei wesentliche Punkte zu beachten:
Einerseits muss sichergestellt sein, dass die Dichtigkeit des Behälters im Bereich der Kabeldurchführung nicht beeinträchtigt ist. Andererseits müssen die Verbindungen zwischen Schnittstelle der Steuer- und Auswerteelektronik und dem Signalkabel bzw. den Anschlüssen an der Sensoreinheit und dem Signalkabel geschützt gegen Umgebungseinflüsse innerhalb und außerhalb des Behälters sein, was bedeutet, dass der Prozessanschluss sowohl mit dem Behälter als auch mit dem Gehäuse dicht verbunden sein muss. Könnte beispielsweise bei einem im Freien aufgestellten Behälter Feuchtigkeit -und sei es auch nach einem Zeitraum von mehreren Monaten- in den Bereich der Verbindung zwischen Signalkabel und Schnittstelle der Steuer- und Auswerteelektronik gelangen, wären Fehlmessungen und schlimmstenfalls ein das Füllstandmessgerät zerstörender Kurzschluss möglich.

Aus diesem Grund ist es üblich, derartige Füllstands- und Druckmessinstrumente mit fest miteinander verbundenen Komponenten herzustellen und auszuliefern. Dazu wird die in das Gehäuse aufgenommene Steuer- und Auswerteelektronik mit einem Prozessanschluss, in den das Signalkabel unter Verwendung von Dichtungen aufgenommen ist, mechanisch und elektrisch unlösbar verbunden. Die elektrische Verbindung zwischen dem Interface der Steuer- und Auswerteelektronik und dem Signalkabel wird über im Prozessanschluss integrierte Presshülsen hergestellt, in die von der Richtung des Signalkabels her abgelitzte, gegebenenfalls mit Aderhülsen versehene Abschnitte der Adern des Signalkabels eingeführt und mit aus Richtung der Steuer- und Auswerteelektronik zugeführten Interface-Pins in stoßende Verbindung gebracht und in dieser Position verpresst werden, so dass eine beidseitige Quetschverbindung entsteht. An dem anderen Ende des Signalkabels ist die Sensoreinheit befestigt, über deren Anschlüsse ebenfalls eine elektrische Verbindung mit den Adern des Signalkabels hergestellt ist. Zum Einbau des so vorkonfigurierten Füllstandmessgerätes in den Behälter ist es dann nur noch notwendig, die Sensoreinheit durch eine Öffnung in den Behälter einzuführen und diese Öffnung dann flüssigkeits- und/oder gasdicht mit dem Prozessanschluss zu verschließen.

Dabei erweist es sich als problematisch, dass bei dieser Vorgehensweise die Kabel- und/oder Abspannlänge fest vorgegeben ist. Typische Kabellängen, die in industriellen Anwendungen Verwendung finden, liegen im Bereich von mehreren Metern. Gleichzeitig können Veränderungen der Sensorposition von wenigen Zentimetern aber die Qualität der erzielbaren Messwerte drastisch beeinflussen. Selbst wenn man die optimale Position für die Sensoreinheit im Behälterinneren a priori genau kennen würde, wäre also eine Längenangabe für die benötigte Kabellänge mit einer Genauigkeit von wenigen Promille der Gesamtlänge durch den Anwender an den Hersteller des Füllstandmessgerätes erforderlich. Z.B. wegen Fertigungstoleranzen zeigt sich aber in der Praxis, dass oftmals eine individuelle Anpassung der Sensorposition und damit der Kabellänge für unterschiedliche Behälter sogar dann erforderlich ist, wenn es sich um denselben Behältertyp handelt. Dies führt zumindest zum Kauf von nicht optimal einsetzbaren Füllstandmessgeräten, in vielen Fällen aber sogar zu Fehlbestellungen und somit unnötigen Kosten.

Dieses Problem lösen ein Füllstandmessgerät mit den Merkmalen des Anspruchs 1 und ein Verfahren zur Montage eines Füllstandmessgerätes mit den Merkmalen des Anspruchs 10. Vorteilhafte Ausgestaltungen der Erfindung sind den Unteransprüchen zu entnehmen.

Ein erfindungsgemäßes Füllstandmessgerät zum Messen eines Füllstands eines Behälters weist somit eine in einem Gehäuse angeordnete Steuer- und Auswerteelektronik mit einem Interface, eine Sensoreinheit mit einem Sensor und Anschlüssen, eine durch eine Wandung des Behälters oder einen auf eine Öffnung des Behälters aufsetzbare Prozessanschluss , beispielsweise einen Flansch, geführtes Signalkabel zur Verbindung zwischen Steuer- und Auswerteelektronik und Sensoreinheit und eine Verbindungseinrichtung (240) auf, die sowohl eine mechanische Verbindung zwischen einem Prozessanschluss und dem Gehäuse der Steuer- und Auswerteelektronik als auch eine elektrische Verbindung zwischen dem Interface der Steuer- und Auswerteelektronik und dem Signalkabel herstellt . Erfindungsgemäß ist die durch die Verbindungseinrichtung hergestellte mechanische und elektrische Verbindung lösbar gestaltet.

Unter dem Begriff "Prozessanschluss" ist hierbei lediglich der mechanische Anschluss zum Prozess hin zu verstehen. Er umfasst nicht die elektrische Verbindung. Prozessanschluss kann z. B. ein Flansch oder ein Schraubgewinde sein. Bei einem Prozessanschluss in Flanschversion ist am Behälter ein Flansch angeschweißt. Die Steuer- und Auswerteelektronik ist in einem Gehäuse untergebracht, welche einen "Gegenflansch" zum Behälterflansch aufweist. Flansch und Gegenflansch werden mittels Schrauben miteinander fest verbunden.

Erfindungsgemäß sind zur Herstellung der lösbaren elektrischen Verbindung innerhalb eines Gehäuses einer Verbindungseinrichtung Klemmen vorgesehen, wobei sinnvollerweise für jede Ader des Signalkabels eine Klemme vorgesehen ist. Nach einer geeigneten Längenanpassung des Signalkabels können die einzelnen Adern des Signalkabels abgelitzt, d. h. von ihrer Isolierung befreit werden, ggf. mit einer Aderendhülse versehen, in die Klemme eingeführt und dort verklemmt werden. Neben der Erzeugung der lösbaren elektrischen Verbindung wird bei dieser Anordnung auch eine erfindungsgemäße Zugentlastung der Verbindung sichergestellt werden. Die Klemmen stehen ihrerseits in elektrischer Verbindung mit dem Interface der Steuer- und Auswerteelektronik.

Es hat sich gezeigt, dass eine azentrische Anordnung der Klemmen, bei der sie radial von der Mitte des Gehäuses der Verbindungseinrichtung weg zum Rand des Gehäuses der Verbindungseinrichtung hin versetzt angeordnet sind, vorteilhaft ist, da bei einer solchen Anordnung besonders viel Raum beim Einführen der Adern des Signalkabels in die Klemmen verfügbar ist und somit dieser Arbeitsschritt einfacher und schneller durchgeführt werden kann. Darüber hinaus lässt sich bei einer solchen Anordnung auch eine effektive Zugentlastung der elektrischen Verbindung leichter erzielen, da mehr Platz zur Unterbringung zusätzlicher Kabellänge, die das Arbeiten des Kabels auffängt, verfügbar ist.

Besonders einfach wird der Arbeitsschritt des Herstellens der lösbaren elektrischen Verbindung, wenn die in dem Gehäuse der Verbindungseinrichtung angeordneten Klemmen schräg zu einer Seitenwandung des Gehäuses der Verbindungseinrichtung ausgerichtet sind, da dadurch sowohl eine gute Zugänglichkeit des Klemmmechanismus als auch ein einfacher Zugriff auf die Einführöffnungen der Klemmen sichergestellt ist.

Als vorteilhaft hat sich weiter erwiesen, die Klemmen für Kabelquerschnitte von maximal 2,5mm x 2,5 mm auszugelegen. Bei Verwendung größerer Kabelquerschnitte wird der gewünschte Nebeneffekt einer Zugentlastung nicht mehr effektiv erreicht, da Adern mit einem derart großen Querschnitt bereits relativ starr sind.

Eine besonders brauchbare Ausgestaltung der Erfindung sieht vor, dass die mechanische Verbindung zwischen der Verbindungseinrichtung und Flansch lösbar ist und dass die mechanische Verbindung zwischen der Verbindungseinrichtung und Gehäuse der Steuer- und Auswerteelektronik unlösbar ist.

In dieser Ausgestaltung ist es wichtig, die Dichtigkeit der Verbindung, z.B. gegen Gas- und/oder Flüssigkeitsdurchtritt, zu gewährleisten. Dies kann auf vorteilhafte Weise erzielt werden, indem in eine Anlagefläche, mit der die Verbindungseinrichtung an dem Flansch anliegt, eine umlaufende Nut angebracht ist, in der eine Dichtung angeordnet ist. Dabei haben Versuche der Anmelderin ergeben, dass optimale Resultate erzielbar sind, wenn diese Dichtung in die Nut eingespritzt ist. Dies lässt sich beispielsweise unter Verwendung eines thermoplastischen Elastomers (TPE) erzielen.
Das erfindungsgemäße Verfahren zur Montage eines Füllstandmessgeräts mit einer in einem Gehäuse angeordneten Steuer- und Auswerteelektronik mit einem Interface, einer Sensoreinheit mit einem Sensor und Anschlüssen, einem Signalkabel zum Herstellen einer Signalverbindung zwischen Steuer- und Auswerteelektronik und Sensoreinheit und einer Verbindungseinrichtung an und/oder in einem Behälter, sieht zumindest die folgenden Schritte vor, die in der angegebenen Reihenfolge - gegebenenfalls allerdings mit dazwischen eingeschobenen zusätzlichen Arbeitsgängen- ausgeführt werden: Zunächst wird die mit dem Signalkabel verbundenen Sensoreinheit in den Behälter eingebracht und dann das Signalkabel durch eine Wandung des Behälters oder einen zum Verschluss einer Öffnung des Behälters verwendbaren Flansch geführt. Dabei wird sichergestellt, dass sich die Sensoreinheit an der optimalen Position innerhalb des Behälters befindet und dann die Länge des Signalkabels an diese optimale Position der Sensoreinheit angepasst. Anschließend werden eine lösbare elektrische Verbindung zwischen Signalkabel und Interface der Steuer- und Auswerteelektronik über die Verbindungseinrichtung und dann eine lösbare mechanische Verbindung zwischen Gehäuse und einer Behälterwandung oder einem Flansch über den Prozessanschluss hergestellt.

In einer besonders vorteilhaften Ausgestaltung des Verfahrens wird zum Herstellen der lösbaren elektrischen Verbindung eine Klemmverbindung zwischen abgelitzten und/oder mit Aderendhülsen versehene Adern des Signalkabels und einer oder mehreren an der Verbindungseinrichtung vorgesehenen Klemmen hergestellt. Diese Art der Herstellung einer lösbaren elektrischen Verbindung ist einerseits besonders einfach, aber andererseits zugleich sehr zuverlässig und sicher.

Ein Ausführungsbeispiel wird nachfolgend anhand von Zeichnungen näher erläutert. Es zeigen:
- Fig. 1: eine Schnittzeichnung eines Füllstandmessgerät gemäß Stand der Technik
- Fig. 2: eine Schnittzeichnung der Verbindungseinrichtung eines erfindungsgemäßen Füllstandmessgerätes.

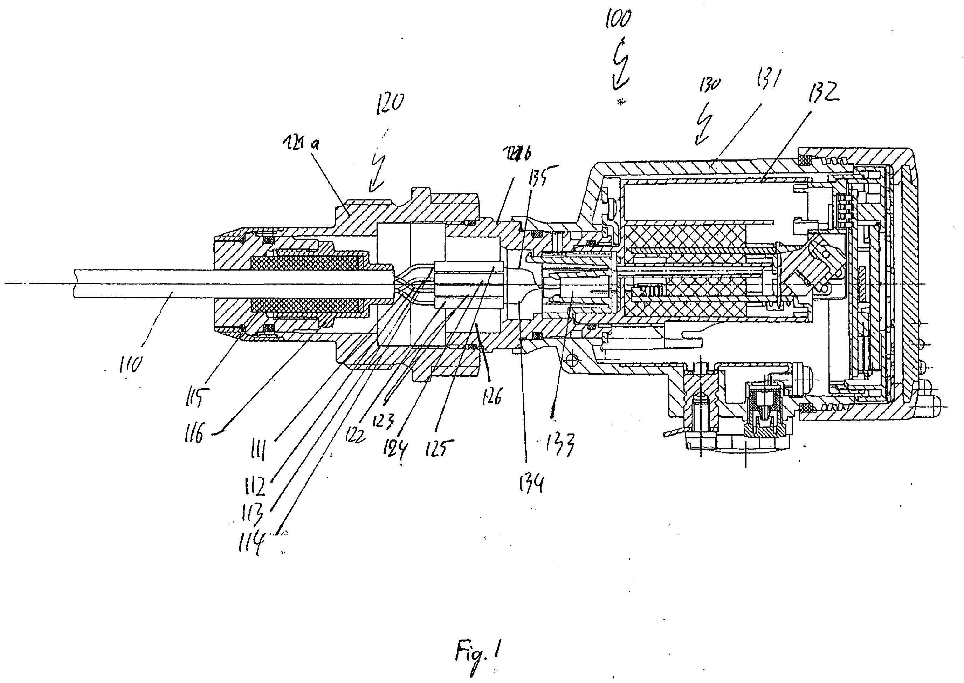

Figur 1 zeigt ein Füllstandmessgerät, wie es aus dem Stand der Technik bekannt ist, als Schnittzeichnung. Man erkennt ein Signalkabel 110, das in ein Gehäuse einer Verbindungseinrichtung 120 hineingeführt ist und im Inneren der Verbindungseinrichtung 120 in Adern 111, 112, 113, 114 aufgeteilt ist. Dabei ist durch Dichtelemente 115, 116 sichergestellt, dass die Durchführung flüssigkeits- und/oder gasdicht ist.

Die Verbindungseinrichtung 120 weist einen Prozessanschluss mit zwei fest miteinander verbundenen Gehäuseabschnitten 121a und 121b auf, wobei der Gehäuseabschnitt 121a in eine Öffnung eines nicht dargestellten Behälters einsetzbar ist, während der Gehäuseabschnitt 121b mechanisch mit einem vereinfacht und schematisch dargestellte eine Steuer- und Auswerteeinrichtung 132 umgebenden Gehäuse 131 verbunden ist, das den Gehäuseabschnitt 121b übergreift.

Ferner erkennt man in Figur 1 eine Steuer- und Auswerteeinheit 130 mit einem Gehäuse 131, einer Steuer- und Auswerteelektronik 132 mit einem Interface 133 und Anschlüssen 134, 135 des Interface 133. Eine elektrische Verbindung ist in Figur 1 dadurch hergestellt, dass im Inneren der Gehäuseabschnitte 121a, 121b der Verbindungseinrichtung 120 auf einer Platine 126 Presshülsen 122, 123, 124, 125 angeordnet sind, in welche von der Seite des Signalkabels 110 her kabelseitig die abgelitzten und ggf. mit Aderhülsen versehenen Adern 111, 112, 113, 114 und von der Seite der Steuer- und Auswerteelektronik 132 her die Anschlüsse 134, 135 des Interface 133 der Steuer- und Auswerteelektronik 132 jeweils hineingeführt und durch Verquetschen fixiert sind.

Eine typische Vorgehensweise bei der Herstellung des aus dem Stand der Technik bekannten Füllstandmessgeräts gemäß Figur 1 besteht darin, zunächst die Anschlüsse 134, 135 des Interface 133 der Steuer- und Auswerteelektronik 132 in die Presshülsen 122, 123, 124, 125 einzuführen und anschließend die mechanische Verbindung zwischen dem Gehäuseabschnitt 121b und dem die Steuer- und Auswerteelektronik 132 umgebenden Gehäuse 131 herzustellen. Das bereits an einem Ende mit der nicht dargestellten Sensoreinrichtung verbundene Signalkabel 110 wird in die dafür vorgesehene Öffnung des Gehäuseabschnitts 121a der Verbindungseinrichtung 120 eingeführt und eine elektrische Verbindung zur Steuer- und Auswerteelektronik hergestellt, indem die Adern 111, 112, 113, 114 des Signalkabels 110 ebenfalls in die Presshülsen 122, 123, 124, 125 eingeführt und dann die Presshülsen 122, 123, 124, 125 mit einem Spezialwerkzeug verquetscht werden. Danach werden noch die Gehäuseabschnitte 121a und 121b in Kontakt zueinander gebracht und unlösbar mechanisch miteinander verbunden. Eine spätere Anpassung der Kabellänge ist dadurch unmöglich geworden.

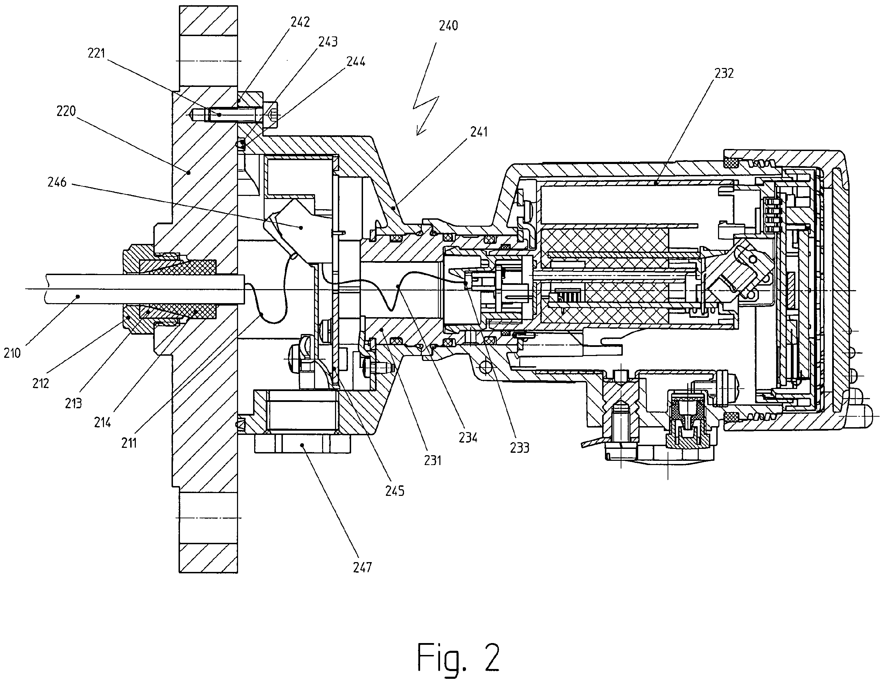

Figur 2 zeigt den Bereich einer Verbindungseinrichtung 240, wie sie in einem erfindungsgemäßen Füllstandmessgerät verwendet wird. Man erkennt einen Endabschnitt eines Signalkabels 210, dessen nicht dargestellter Endabschnitt elektrisch mit nicht dargestellten Anschlüssen einer ebenfalls nicht dargestellten Sensoreinrichtung verbunden ist. Das Signalkabel 210 ist durch den Flansch 220 hindurchgeführt auf der der Verbindungseinrichtung 240 zugewandten Seite des Flansches 220 tritt beispielhaft eine Ader 211 aus dem Signalkabel 210 hervor. In der praktischen Anwendung gibt es in der Regel eine Vielzahl von Adern 211, die hier lediglich aus Gründen der Übersichtlichkeit nicht alle dargestellt werden.

Es ist zwingend erforderlich, eine flüssigkeits- und/oder gasdichte Durchführung des Signalkabels 210 durch den Flansch 220 vorzusehen. Erfindungsgemäß erfolgt dies durch das Vorsehen einer Reihe von Dichtelementen 212, 213, 214.

Die Verbindungseinrichtung 240 weist ein radialsymmetrisches Prozessanschlussgehäuse 241 auf, das mit einer Anlagefläche 242 am Flansch 220 anliegt. In die Anlagefläche 242 ist eine hier rechteckig ausgeführte Nut 243 eingebracht, in die eine Dichtung 244 aus TPE eingespritzt ist. Um einen dichten Übergang zwischen Flansch 220 und Verbindungseinrichtung 241 zu gewährleisten, ist am Prozessanschlussgehäuse 241 eine röhrenförmige Ausnehmung 247 vorgesehen, in die eine nicht dargestellte Schraube eingeführt werden kann, die in ein im Flansch 220 vorgesehenes Sackloch 221 mit Gewinde eingreifen kann und dadurch eine Andruckkraft zwischen der Anlagefläche 242 und der Oberfläche des Flansches 220 bereitstellt.

Die Verbindungseinrichtung 240 weist weiterhin in ihrem Inneren eine Platine 245 auf, auf der je nach Zahl der Adern 211 eine entsprechende Zahl von Klemmen 246 -beispielsweise in Form einer Klemmenleiste- azentrisch angeordnet ist. Außerdem sind die Klemmen bzw. der Teil der Klemmen, in die die Adern 211 einzuführen sind, schräg zur Seitenwandung angeordnet, was besonders sowohl das Einführen von Adern 211 als auch die Bedienung des Klemmmechanismus besonders leicht ermöglicht.

In die dargestellte Klemme 246 aufgenommen ist ein abgelitzter und/oder mit Aderendhülse versehender Abschnitt der Ader 211. Die Klemme oder die Klemmen 246 sind, ggf. über die Platine 245,elektrisch mit den entsprechenden Anschlüssen 234 eines Interface 233 einer in einem Gehäuse 231 angeordneten Steuer- und Auswerteelektronik 232 verbunden. Das Gehäuse 231 greift dabei in das Prozessanschlussgehäuse 241 ein und ist mechanisch fest mit dem Prozessanschlussgehäuse 241 verbunden.

Gemäß dieser Ausführungsform werden somit zwei vorkonfigurierte Baugruppen bereitgestellt, die mechanisch und elektrisch miteinander verbindbar und voneinander lösbar sind: Einerseits das mit der Sensoreinrichtung bzw. deren Anschlüssen verbundene und durch den Flansch 220 geführte Signalkabel 210 und andererseits die bereits mechanisch mit dem Gehäuse 231 der Steuer- und Auswerteelektronik 232 und elektrisch über die Klemme oder die Klemmen 246 mit Anschlüssen 234 des Interface 233 der Steuer- und Auswerteelektronik 232 verbundene Verbindungseinrichtung 240.

Der Benutzer des erfindungsgemäßen Füllstandmessgeräts kann somit die Länge des Signalkabels 210 an die optimale Sensorposition anpassen und danach die lösbare elektrische Verbindung durch Einführen von abgelitzten und ggf. mit Aderendhülsen versehenen Adern 211 in die Klemmen 246 und anschließendes Verklemmen herstellen. Anschließend wird die mechanische lösbare Verbindung zwischen Flansch 220 und Prozessanschlussgehäuse 241 hergestellt. Ergibt sich aus irgendeinem Grund die Notwendigkeit, die Kabellänge des Signalkabels 210 noch ein weiteres Mal zu verändern, ist auch dies problemlos möglich. Es muss lediglich zunächst die mechanische Verbindung und danach die elektrische Verbindung gelöst. Bei den im Ausführungsbeispiel vorgesehenen Schraub- bzw. Klemmverbindungen ist dies jederzeit problemlos möglich.

### Bezugszeichenliste:

- 100: Füllstandmessgerät
- 110: Signalkabel
- 111: Ader
- 112: Ader
- 113: Ader
- 114: Ader
- 115: Dichtelement
- 116: Dichtelement
- 120: Verbindungseinrichtung
- 121a: erster Gehäuseabschnitt
- 121b: zweiter Gehäuseabschnitt
- 122: Presshülse
- 123: Presshülse
- 124: Presshülse
- 125: Presshülse
- 126: Platine
- 130: Steuer- und Auswerteeinheit
- 131: Gehäuse
- 132: Steuer- und Auswerteelektronik
- 133: Interface
- 134: Anschluss
- 135: Anschluss

- 210: Signalkabel
- 211: Ader
- 212: Dichtelement
- 213: Dichtelement
- 214: Dichtelement
- 220: Prozessanschluss
- 221: Sackloch mit Gewinde
- 231: Gehäuse
- 232: Steuer- und Auswerteelektronik
- 233: Interface
- 234: Anschluss

- 240: Verbindungseinrichtung
- 241: Gehäuse
- 242: Anlagefläche
- 243: Nut
- 244: Dichtung
- 245: Platine
- 246: Klemme
- 247: röhrenförmige Ausnehmung

## Patentansprüche

1. Füllstandmessgerät (100) zum Messen eines Füllstands eines Behälters mit
- einer in einem Gehäuse (131, 231) angeordneten Steuer- und Auswerteelektronik (132, 232) mit einem Interface (133, 233),
- einer Sensoreinheit mit einem Sensor und Anschlüssen,
- einem Signalkabel (110, 210) zur Verbindung von Steuer- und Auswerteelektronik (132, 232) und Sensoreinheit, und
- eine Verbindungseinrichtung (120, 240), die sowohl eine mechanische Verbindung zwischen Sensoreinheit und dem Gehäuse (131, 231) der Steuer- und Auswerteelektronik (132, 232) und eine elektrische Verbindung zwischen dem Interface (133, 233) der Steuer- und Auswerteelektronik (132, 232) und dem Signalkabel (110, 210) herstellt, wobei durch die Verbindungseinrichtung (120, 240) hergestellte mechanische und elektrische Verbindung jeweils lösbar sind,
**dadurch gekennzeichnet, dass**
die elektrische Verbindung über eine oder mehrere in der Verbindungseinrichtung (120, 240) angeordnete Klemmen (246) hergestellt ist und eine Kabeldurchführung für das Signalkabel (210) in einem Prozessanschluss (220) mit einer Zugentlastung ausgebildet ist, wobei die Zugentlastung, mittels einer in der Kabeldurchführung angeordneten, aussenseitig konisch ausgebildeten Dichtung (214) mit über der außenseitig konisch ausgebildeten Dichtung (214) angeordneter innenseitig konisch ausgebildeten Dichtung (213) gebildet ist und die innenseitig konisch ausgebildete Dichtung (213) und die außenseitig konisch ausgebildete Dichtung (214) über ein weiteres Dichtelement (212) gegeneinander verspannt sind.

2. Füllstandmessgerät (100) nach Anspruch 1,
**dadurch gekennzeichnet, dass** die in
der Verbindungseinrichtung (120, 240) angeordneten Klemmen (246) azentrisch angeordnet sind.

3. Füllstandmessgerät (100) nach Anspruch 1 oder 2,
**dadurch gekennzeichnet, dass** die in
der Verbindungseinrichtung (120, 240) angeordneten Klemmen (246) schräg zu einer Seitenwandung des Prozessanschlusses (120, 240) angeordnet sind.

4. Füllstandmessgerät (100) nach einem der Ansprüche 1 bis 3,
**dadurch gekennzeichnet, dass** die Klemmen (246) für Kabelquerschnitte von maximal 2,5mm x 2,5 mm ausgelegt sind.

5. Füllstandmessgerät (100) nach einem vorstehenden Anspruch,
**dadurch gekennzeichnet,dass** der Prozessanschluss (220) ein Flansch ist, dass die mechanische Verbindung zwischen Verbindungseinrichtung (120, 240) und dem Flansch (220) lösbar ist und dass die mechanischen Verbindung zwischen Verbindungseinrichtung (120, 240) und Gehäuse (131, 231) der Steuer- und Auswerteelektronik unlösbar ist.

6. Füllstandmessgerät (100) nach Anspruch 5,
**dadurch gekennzeichnet, dass** in eine Anlagefläche (242), mit der die Verbindungseinrichtung (120, 240) an dem Flansch (220) anliegt, eine umlaufende Nut (243) angebracht ist, in der eine Dichtung (244) angeordnet ist.

7. Füllstandmessgerät (100) nach Anspruch 6,
**dadurch gekennzeichnet, dass** die Dichtung (244) in die Nut (243) eingespritzt ist.

8. Füllstandmessgerät (100) nach Anspruch 6 oder 7,
**dadurch gekennzeichnet, dass** die Dichtung (244) aus einem thermoplastischen Elastomer besteht.

## Claims

1. A filling level measuring device (100) for measuring a filling level of a container, comprising
- an electronic control and evaluation system (132, 232) with an interface (133, 233), which system is disposed in a housing (131, 231),
- sensor unit with a sensor and terminals,
- a signal cable (110, 210) for connecting the electronic control and evaluation system (132, 232) and the sensor unit, and
- a connecting device (120, 240), which establishes both a mechanical connection between the sensor unit and the housing (131, 231) of the electronic control and evaluation system (132, 232) and an electrical connection between the interface (133, 233) of the electronic control and evaluation system (132, 232) and the signal cable (110, 210), each of the mechanical and electrical connections established by the connecting device (120, 240) being detachable,
**characterized in that**
the electrical connection is established by one or more clamps (246) disposed in the connecting device (120, 240) and a cable feed-through device for the signal cable (210) in a process connection (220) is configured with a strain relief means, wherein the strain relief means is formed by an externally conically formed seal (214) disposed in the cable feed-through device with an internally conically formed seal (213) arranged over the externally conically formed seal (214), and the internally conically formed seal (213) and the externally conically formed seal (214) are braced together by another sealing member (212).

2. The filling level measuring device (100) according to claim 1,
**characterized in that** the clamps (246) disposed in the connecting device (120, 240) are arranged acentrically.

3. The filling level measuring device (100) according to claim 1 or 2,
**characterized in that** the clamps (246) disposed in the connecting device (120, 240) are arranged obliquely relative to a side wall of the process connection (120, 240).

4. The filling level measuring device (100) according to any one of the claims 1 to 3,
**characterized in that** the clamps (246) are designed for cable cross-sections of 2.5 mm x 2.5 mm at most.

5. The filling level measuring device (100) according to any one preceding claim,
**characterized in that** the process connection (220) is a flange, that the mechanical connection between the connecting device (120, 240) and the flange (220) is detachable, and that the mechanical connection between the connecting device (120, 240) and the housing (131, 231) of the electronic control and evaluation system is non-detachable.

6. The filling level measuring device (100) according to claim 5,
**characterized in that** a peripherally extending groove (243), in which a seal (244) is disposed, is incorporated into a contact surface (242) with which the connecting device (120, 240) rests against the flange (220).

7. The filling level measuring device (100) according to claim 6,
**characterized in that** the seal (244) is injection-molded into the groove (243).

8. The filling level measuring device (100) according to claim 6 or 7,
**characterized in that** the seal (244) consists of a thermoplastic elastomer.

## Revendications

1. Appareil de mesure de niveau de remplissage (100) destiné à mesurer un niveau de remplissage d'un récipient, comprenant
- une électronique de commande et d'évaluation (132, 232) ayant une interface (133, 233) et disposée dans un boîtier (131, 231),
- une unité de capteur ayant un capteur et des raccords,
- un câble de signal (110, 210) destiné à connecter l'électronique de commande et d'évaluation (132, 232) et l'unité de capteur, et
- un dispositif de connexion (120, 240) qui établit aussi bien une liaison mécanique entre l'unité de capteur et le boîtier (131, 231) de l'électronique de commande et d'évaluation (132, 232) qu'une connexion électrique entre l'interface (133, 233) de l'électronique de commande et d'évaluation (132, 232) et le câble de signal (110, 210), dans lequel la liaison mécanique et la connexion électrique établies par le dispositif de connexion (120, 240) sont chacune amovibles,
**caractérisé par le fait que** la connexion électrique est établie via une ou plusieurs bornes (246) disposées dans le dispositif de connexion (120, 240), et un passage de câble pour le câble de signal (210) est réalisé dans un raccord de processus (220) avec un protecteur de cordon, dans lequel le protecteur de cordon est formé au moyen d'un joint d'étanchéité (214) disposé dans le passage de câble et réalisé de manière conique sur la face extérieure, avec un joint d'étanchéité (213) réalisé de manière conique sur la face intérieure et disposé sur ledit joint d'étanchéité (214) réalisé de manière conique sur la face extérieure, et ledit joint d'étanchéité (213) réalisé de manière conique sur la face intérieure ainsi que ledit joint d'étanchéité (214) réalisé de manière conique sur la face extérieure sont serrés l'un contre l'autre par un autre élément d'étanchéité (212).

2. Appareil de mesure de niveau de remplissage (100) selon la revendication 1, **caractérisé par le fait que** les bornes (246) disposées à l'intérieur du dispositif de connexion (120, 240) sont agencées de manière acentrique.

3. Appareil de mesure de niveau de remplissage (100) selon la revendication 1 ou 2, **caractérisé par le fait que** les bornes (246) disposées à l'intérieur du dispositif de connexion (120, 240) sont agencées de manière oblique par rapport à une paroi latérale du raccord de processus (120, 240).

4. Appareil de mesure de niveau de remplissage (100) selon l'une quelconque des revendications 1 à 3, **caractérisé par le fait que** les bornes (246) sont conçues pour des sections de câbles de 2,5 mm x 2,5 mm au maximum.

5. Appareil de mesure de niveau de remplissage (100) selon l'une quelconque des revendications précédentes, **caractérisé par le fait que** le raccord de processus (220) est une bride, que la liaison mécanique entre le dispositif de connexion (120, 240) et ladite bride (220) est amovible et que la liaison mécanique entre le dispositif de connexion (120, 240) et le boîtier (131, 231) de l'électronique de commande et d'évaluation est inamovible.

6. Appareil de mesure de niveau de remplissage (100) selon la revendication 5, **caractérisé par le fait qu'**une rainure circonférentielle (243) dans laquelle est agencé un joint d'étanchéité est ménagée dans une surface d'appui (242) par laquelle le dispositif de connexion (120, 240) s'applique contre la bride (220).

7. Appareil de mesure de niveau de remplissage (100) selon la revendication 6, **caractérisé par le fait que** ledit joint d'étanchéité (244) est injecté dans la rainure (243).

8. Appareil de mesure de niveau de remplissage (100) selon la revendication 6 ou 7, **caractérisé par le fait que** ledit joint d'étanchéité (244) est constitué d'un élastomère thermoplastique.
